(19) Europäisches Patentamt
European Patent Office
Office européen des brevets

(11) EP 4 645 413 A1

(12) EUROPEAN PATENT APPLICATION
published in accordance with Art. 153(4) EPC

(43) Date of publication:
**05.11.2025 Bulletin 2025/45**

(21) Application number: **23911793.0**

(22) Date of filing: **15.12.2023**

(51) International Patent Classification (IPC):
***H01M 4/13*** *(2010.01)* ***H01M 4/505*** *(2010.01)*
***H01M 4/525*** *(2010.01)* ***H01M 4/62*** *(2006.01)*
***H01M 10/052*** *(2010.01)* ***H01M 50/414*** *(2021.01)*
***H01M 50/449*** *(2021.01)* ***H01M 50/46*** *(2021.01)*

(52) Cooperative Patent Classification (CPC):
**H01M 4/13; H01M 4/505; H01M 4/525; H01M 4/62; H01M 10/052; H01M 50/414; H01M 50/449; H01M 50/46;** Y02E 60/10

(86) International application number:
**PCT/JP2023/045144**

(87) International publication number:
**WO 2024/143012 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2022 JP 2022211917**

(71) Applicant: **Panasonic Intellectual Property Management Co., Ltd.**
**Kadoma-shi, Osaka 571-0057 (JP)**

(72) Inventors:
- **NAKAYAMA, Takahito**
  **Kadoma-shi, Osaka 571-0057 (JP)**
- **HARADA, Maho**
  **Kadoma-shi, Osaka 571-0057 (JP)**
- **NISHINO, Hajime**
  **Kadoma-shi, Osaka 571-0057 (JP)**

(74) Representative: **Novagraaf International SA**
**Chemin de l'Echo 3**
**1213 Onex, Geneva (CH)**

# (54) NONAQUEOUS ELECTROLYTE SECONDARY BATTERY AND POSITIVE ELECTRODE USED IN SAME

(57) A nonaqueous electrolyte secondary battery includes a positive electrode, a negative electrode, a nonaqueous electrolyte, and a separator provided between the positive electrode and the negative electrode. The positive electrode includes a positive electrode current collector and a positive electrode active material layer carried on the positive electrode current collector. The positive electrode active material layer contains a positive electrode active material, a binder, and an additive. The additive is a polymer material having a melting point or thermal decomposition temperature of 200°C or higher and 500°C or lower. In a cross section of the positive electrode active material layer, the polymer material forms and is dispersed as a plurality of island-shaped regions. The average particle diameter of the polymer material is 50 μm or less.

*FIG. 1*

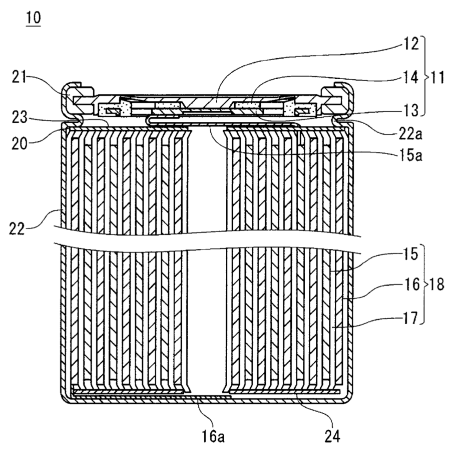


EP 4 645 413 A1

## Description

[Cross Reference to Related Application]

The present application is based on and claims priority under 35 U.S.C. §119 with respect to the Japanese Patent Application No. 2022-211917, filed on December 28, 2022, of which entire content is incorporated herein by reference into the present application.

[Technical Field]

The present disclosure relates to a nonaqueous electrolyte secondary battery and a positive electrode using the same.

[Background Art]

The higher the energy density of secondary batteries, the safer they are required to be. Above all, it is important to reduce heat generation due to an internal short circuit. When a battery is internally short-circuited, the separator melts due to Joule heat generated by the short-circuited current to form a larger short-circuited part even if the short-circuited part is small. When the short-circuited part enlarges and the short-circuit current increases, the battery temperature is acceleratively increased. The higher the energy density of the secondary battery, the higher the Joule heat generated by the short circuit current.

Patent Literature 1 proposes a positive electrode active material that is a powder of a composite oxide having a layered crystal structure, the main component of which is nickel and lithium, wherein the composite oxide has an element composition represented by the general formula: $Li_aNi_{1-b-c}M1_bM2_cO_2$, where $0.95 \leq a \leq 1.05$, $0.01 \leq b \leq 0.10$, and $0.10 \leq c \leq 0.20$ (provided that M1 represents at least one element selected from the group consisting of Al, B, Y, Ce, Ti, Sn, V, Ta, Nb, W, and Mo, and M2 represents at least one selected from the group consisting of Co, Mn, and Fe), and the conductivity: $\sigma$ of the powder at 25°C is in the range of $5 \times 10^{-2} \geq \alpha \geq 5 \times 10^{-4}$ [S/cm] when the compression density is 4.0 g/cm$^3$ in press-forming of the powder of the power.

[Citation List]

[Patent Literature]

Patent Literature 1: Japanese Laid-Open Patent Publication No. 2000-315502

[Summary of Invention]

[Technical Problem]

Patent Literature 1 states that with the positive electrode active material described above, thermal stability in a charged state is improved, Joule heat generation by a short-circuit current is suppressed even in a situation in which an internal short circuit occurs in a battery, and thus safety is easily secured.

However, when the conductivity is controlled as described in Patent Literature 1, the battery has high resistance as a whole, leading to degradation of battery performance.

[Solution to Problem]

One aspect of the present disclosure relates to a nonaqueous electrolyte secondary battery including: a positive electrode; a negative electrode; a nonaqueous electrolyte; and a separator provided between the positive electrode and the negative electrode, wherein the positive electrode includes a positive electrode current collector and a positive electrode active material layer carried on the positive electrode current collector, the positive electrode active material layer contains a positive electrode active material, a binder, and an additive, the additive is a polymer material having a melting point or thermal decomposition temperature of 200°C or higher and 500°C or lower, in a cross section of the positive electrode active material layer, the polymer material forms and is dispersed as a plurality of island-shaped regions, and an average particle diameter of the polymer material is 50 μm or less.

Another aspect of the present disclosure relates to a positive electrode for a secondary battery including: a positive electrode current collector and a positive electrode active material layer carried on the positive electrode current collector, wherein the positive electrode active material layer contains a positive electrode active material, a binder, and an

additive, the additive is a polymer material having a melting point or thermal decomposition temperature of 200°C or higher and 500°C or lower, in a cross section of the positive electrode active material layer, the polymer material forms and is dispersed as a plurality of island-shaped regions, and an average particle diameter of the polymer material is 50 μm or less.

[Advantageous Effects of Invention]

According to the present disclosure, both high safety and good battery performance can be achieved.

While the novel features of the invention are set forth particularly in the appended claims, the invention, both as to organization and content, will be better understood and appreciated, along with other objects and features thereof, from the following detailed description taken in conjunction with the drawings.

[Blief Description of Drawing]

[FIG. 1] FIG. 1 is a schematic longitudinal cross-sectional view of the internal configuration of a secondary battery according to an embodiment of the present disclosure.

[Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be phrased as "a numerical value A or more and a numerical value B or less." In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit.

Nonaqueous electrolyte secondary batteries include at least: a lithium-ion secondary battery that uses, as a negative electrode active material, a material that undergoes reversible absorption and release of lithium ions; a lithium secondary battery in which a lithium metal precipitates at its negative electrode during charging and dissolves during discharging; and a solid battery including a gel electrolyte or a solid electrolyte.

A nonaqueous electrolyte secondary battery according to the present disclosure includes a positive electrode, a negative electrode, and a nonaqueous electrolyte. Typically, a separator is provided between the positive electrode and the negative electrode.

A. Positive Electrode

The positive electrode includes a positive electrode current collector and a positive electrode active material layer carried on the positive electrode current collector. The positive electrode active material layer is formed on a surface of the positive electrode current collector. The positive electrode active material layer may be referred to as positive electrode mixture layer because it is constituted of a positive electrode mixture.

[Positive Electrode Current Collector]

The positive electrode current collector is constituted of a sheet-shaped conductive material. As the positive electrode current collector, a non-porous conductive substrate (e.g., a metal foil) or a porous conductive substrate (e.g., mesh, net, or a punched sheet) is used.

[Positive Electrode Active Material Layer]

The positive electrode active material layer is carried on one or both surfaces of the positive electrode current collector. The positive electrode active material layer contains a positive electrode active material, a binder, and an additive, and may further contain a conductive aid. The additive is a polymer material having a melting point or thermal decomposition temperature of 200°C or higher and 500°C or lower (hereinafter, "melting point or thermal decomposition temperature" may be collectively referred to as "diffusion temperature").

The polymer material forms and is dispersed as a plurality of island-shaped regions in a cross section of the positive electrode active material layer. The island-shaped regions are spot-like regions in which the polymer material is present and can also be referred to as particulate regions when viewed macroscopically. The island-shaped regions may

be regions constituted only of a polymer material (P) or may be aggregated regions formed by aggregation of the polymer material (P) and a material other than the polymer material (P) (e.g., the positive electrode active material or the conductive aid). The shapes of the island-shaped regions are not particularly limited and may be irregular. The polymer material may be an insulative material or a mixture of an insulative material and a conductive material. Hereinafter, such a polymer material is also referred to as "polymer material (P)."

The polymer material (P) has an action of increasing the positive electrode resistance at high temperatures upon occurrence of an internal short circuit in the battery while suppressing an increase in the positive electrode resistance at room temperature. Accordingly, both high safety and good battery performance can be achieved.

Specifically, the polymer material (P) has the function of blocking parts of the conductive paths when an internal short circuit occurs and the short-circuit current increases to increase the battery temperature. The polymer material (P) maintains the island shapes at room temperature and hardly increases the positive electrode resistance. By contrast, when an internal short circuit occurs, the polymer material (P) melts before the battery temperature increases excessively. The molten polymer material (P) diffuses throughout the positive electrode active material layer. The polymer material (P) diffused into the positive electrode active material layer partially blocks the conductive paths by penetrating between particles of the positive electrode active material, between particles of the positive electrode active material and the particles of the conductive aid, and between particles of the conductive aid.

Furthermore, when the polymer material (P) decomposes, the distance between particles of the positive electrode active material increases to increase the positive electrode resistance. As a result, the short-circuit current is reduced.

(Average Area)

The average area of the island-shaped regions may be 200 $\mu m^2$ or less. As a result of the average area of the island-shaped regions being 200 $\mu m^2$ or less, the polymer material (P) has high dispersibility and can sufficiently diffuse across a large area in the positive electrode active material layer at high temperatures, thereby significantly increasing the resistance. The average area of the island-shaped regions may be 120 $\mu m^2$ or less, 60 $\mu m^2$ or less, 50 $\mu m^2$ or less, or 30 $\mu m^2$ or less. The lower limit of the average area of the island-shaped regions is not particularly limited, and may be 10 $\mu m^2$ or more, for example.

Here, the average area of the island-shaped regions is an area obtained by dividing a total area St of the island-shaped regions included in an observation area of a cross section of the positive electrode active material layer by the number N of the island-shaped regions included in the observation area. However, the size of the observation area is set to a size in which at least 30 island-shaped regions can be observed. The height of the observation area may be, for example, the same as a thickness (T) of the positive electrode active material layer or may be 80% or more of the thickness. A length (W) of the observation area in the surface direction of the positive electrode active material layer may be between 200 $\mu m$ and 500 $\mu m$. In this case, the size of the observation area is $T \times W$ ($\mu m^2$).

(Average Perimeter)

The average perimeter of the island-shaped regions is preferably 60 $\mu m$ or less. When the average perimeter of the island-shaped regions is 60 $\mu m$ or less, the size of the plurality of island-shaped regions is considered to be sufficiently small. When the average perimeter is sufficiently small, the polymer material (P) has sufficiently high dispersibility and can diffuse across a large area in the positive electrode active material layer at high temperatures upon occurrence of an internal short circuit. Thus, the positive electrode resistance can be significantly increased. The average perimeter of the island-shaped regions may be 60 $\mu m$ or less, 40 $\mu m$ or less, 30$\mu m$ or less, or 20 $\mu m$ or less. The lower limit of the average perimeter of the island-shaped regions is not particularly limited, and may be 1 $\mu m$ or more, for example.

Here, the average perimeter of the island-shaped regions is a length obtained by dividing the total length of the perimeters of the plurality of island-shaped regions included in the observation area in the cross section of the positive electrode active material layer by the number of the island-shaped regions included in the observation area. However, the size of the observation area is the same as that in the case of determining the average area of the island-shaped regions.

(Variance of Voronoi Diagram)

Next, the variance of a Voronoi diagram (hereinafter, also referred to as "Voronoi variance") obtained by Voronoi tessellation of the observation area for the island-shaped regions is desirably $2 \times 10^7$ $\mu m^4$ or less. It can be said that the smaller the Voronoi variance, the better the dispersibility. When the Voronoi variance is $2 \times 10^7$ $\mu m^4$ or less, the polymer material (P) can diffuse across a large area in the positive electrode active material layer at high temperatures upon occurrence of an internal short circuit. As a result, the positive electrode resistance can be significantly increased. The Voronoi variance may be $2 \times 10^6$ $\mu m^4$ or less, $2 \times 10^5$ $\mu m^4$ or less, $1 \times 10^5$ $\mu m^4$ or less, or $5 \times 10^4$ $\mu m^4$ or less. The lower

limit of the Voronoi variance is not particularly limited, and may be $1 \times 10^4$ $\mu m^4$ or more, for example.

The size of the observation area to be subj ected to Voronoi tessellation is the same as that in the case of determining the average area of the island-shaped regions. Specifically, Voronoi tessellation is performed using the center (center of gravity) of each island-shaped region included in the observation area as a base point, and a histogram of the divided regions is calculated to obtain a Voronoi variance. The Voronoi variance is obtained as an average value of three or more Voronoi variances obtained in at least three observation areas.

(Aggregated Particle Area)

Among the island-shaped regions in the positive electrode active material layer, the average area (hereinafter, also referred to as "aggregated particle area") of the top three largest island-shaped regions is desirably 900 $\mu m^2$ or less. It can be said that dispersibility of the polymer material (P) is sufficiently high when the aggregated particle area of the island-shaped regions is 900 $\mu m^2$ or less. As a result, the polymer material (P) can diffuse across a large area in the positive electrode active material layer at high temperatures upon occurrence of an internal short circuit, and resistance can be significantly increased. The aggregated particle area of the island-shaped regions may be 800 $\mu m^2$ or less, 700 $\mu m^2$ or less, or 400 $\mu m^2$ or less. The lower limit of the aggregated particle area of the island-shaped regions is not particularly limited and may be 100 $\mu m^2$ or more. The top three largest island-shaped regions are considered to be aggregated regions of the polymer material (P) or aggregated regions of the polymer material (P), the positive electrode active material, and the conductive aid. By making the area of such aggregated regions sufficiently small, dispersibility of the polymer material (P) is significantly increased.

Here, the aggregated particle area of the island-shaped regions is defined as an area obtained by dividing the total area of the island-shaped region having the largest area, the island-shaped region having the second largest area, and the island-shaped region having the third largest area by 3, among the plurality of island-shaped regions included in the observation area of the cross section of the positive electrode active material layer. The size of the observation area is the same as that in the case of determining the average area of the island-shaped regions. Note that the largest area of the island-shaped regions is obtained as an average value of three or more aggregated particle areas obtained in at least three mutually parallel, different observation areas (cross sections).

The average area, average perimeter, variance of the Voronoi diagram, aggregate particle area, and the like of the island-shaped regions can be measured in the following manner.

(1) Preparation of Cross Section of Positive Electrode Active Material Layer

First, a positive electrode as a measurement target is prepared. Next, its positive electrode active material layer and its positive electrode current collector are simultaneously cut in the thickness direction of the positive electrode to form a cross section. At that time, a thermosetting resin may be filled in the positive electrode active material layer and cured. A cross-sectional sample of the positive electrode active material layer is obtained by a cross-sectional polisher (CP) method or a focused ion beam (FIB) method, for example.

The positive electrode as a measurement target is taken out of a secondary battery having a depth of discharge (DOD) of 90% or more. The depth of discharge (DOD) is the ratio of the amount of electricity discharged to the amount of electricity that the battery in a fully charged state can hold. Note that the rated capacity corresponds to the amount of electricity (i.e., the full charged capacity) necessary when a battery in a fully discharged state (DOD = 100%) is charged to a fully charged state (SOC = 100%, DOD = 0%). The voltage of the fully charged battery corresponds to the end-of-charge voltage. The voltage of the fully discharged battery corresponds to the end-of-discharge voltage.

(2) Capture of Cross Section of Positive Electrode Active Material Layer Using Scanning Electron Microscope (SEM)

Next, the cross-sectional sample of the positive electrode active material layer is observed using a SEM. Observation using a SEM is performed at a magnification of 100 times to 500 times, for example. A SEM image is captured so that an area having a length of 200 $\mu m$ or more (desirably 300 $\mu m$ or more) in the surface direction of the positive electrode active material layer is observed.

(3) Element Analysis

The SEM image of the cross-sectional sample is used for element analysis using an energy-dispersive X-ray spectroscope (EDX) or an electron probe micro-analyzer (EPMA). By extracting a component (e.g., sulfur element) derived from the polymer material (P) from the analysis data of the cross section, a mapped image of the polymer material (P) can be obtained. By analyzing the mapped image using image analysis software, the average area, average perimeter, variance of the Voronoi diagram, aggregate particle area, and the like of the island-shaped regions can be calculated. The

mapped image can be obtained by binarizing the analysis data of the cross section by EDX or EPMA so that the polymer material (P) is binarized to black while the regions other than the polymer material (P) are binarized to white. For example, a mapped image can be obtained in a manner that each region obtained by dividing the observation area into 256 × 256 sections is analyzed by EDX and binarization is performed so that a component (e.g., sulfur element) derived from the polymer material (P) is binarized to black while the other regions are binarized to white. When a set of two or more black regions that are adjacent to each other vertically, horizontally, or obliquely is taken as one island-shaped region, the length of the contour surrounding the set is the perimeter of the island-shaped region. When a single black region is taken as one island-shaped region, the length of the contour surrounding the single black region is the perimeter of the island-shaped region. The area of the region surrounded by each contour is the area of the island-shaped region.

Next, a method of obtaining a variance of the Voronoi diagram will be described.

First, Voronoi tessellation of a binarized image is performed using image analysis software. In Voronoi tessellation, the center of each independent island-shaped region is extracted and division into regions (hereinafter, also referred to as "Voronoi regions") is performed based on which of the extracted centers is closest to another point in the same distance space. The boundary of each Voronoi region corresponds to the locus of the bisectors between the centers. Then, the area of each Voronoi region is extracted, and its variance is taken as a Voronoi variance. A variance V can be obtained using the following equation, where the areas of the respective Voronoi regions are Xi (I = 1, 2, . . ., n) and their average is Xave.

$$V = 1/n\Sigma(Xi - Xave)^2$$

(4) Analysis Conditions

The following indicates desirable conditions for SEM-EPMA measurement for analyzing the cross-sectional sample of the positive electrode active material layer.

As a processing device, IB-19520CCP (cross-section polisher) produced by JEOL Ltd. can be used. The processing conditions are set to an acceleration voltage of 6 kV, a current of 150 to 180 μA, and a vacuum of $5 \times 10^{-4}$ to $2 \times 10^{-3}$ Pa.

As a measuring device, JSM-7900F (field emission scanning electron microscope) produced by JEOL Ltd. and XM-86030 (EPMA detector) produced by JEOL Ltd. can be used. The analysis acceleration voltage is set to 8 kV and the SEM acceleration voltage is set to 2 kV. The electron beam current is set to $5 \times 10^{-8}$ A, and the observation magnification is set at 300 times. The measurement time is 30 ms.

In binarization, it is possible that regions having an X-ray intensity of 50 or more for a component (e.g., sulfur element) derived from the polymer material (P) detected under the above conditions are binarized to black while regions having an X-ray intensity of less than 50 are binarized to white. It is preferable to binarize regions having an X-ray detection count of 50 cps or more and a signal/noise intensity ratio of 1.5 or more to black while binarizing the other regions to white.

[Polymer Material (P)]

The following exemplarily describes a desirable polymer material (P).

The melting point or thermal decomposition temperature (diffusion temperature) of the polymer material (P) is 200°C or higher and 500°C or lower. Usually, the positive electrode active material layer contains a polymer material functioning as a binder in addition to the polymer material (P). However, the binder has a higher binding property than the polymer material (P). In addition, the binder may not form island-shaped regions. In other words, the positive electrode active material layer may contain a polymer material that forms island-shaped regions and a polymer material that forms no island-shaped regions. As the binder, a polymer may be used that does not usually melt or thermally decompose at a diffusion temperature of 200°C or higher and 500°C or lower. When the diffusion temperature of the polymer material (P) is below 200°C, the polymer material (P) may melt or decompose during normal use or a production process of the battery, leading to degradation of battery performance. By contrast, when the diffusion temperature of the polymer material (P) exceeds 500°C, the diffusion rate of the polymer material (P) when temperature increases decreases, with a result that a satisfactory resistance increasing effect cannot be obtained.

The polymer material (P) is preferably a linear polymer having no crosslinked structure. The linear polymer having no cross-linked structure has a large degree of freedom and therefore easily diffuses and decomposes in the positive electrode active material layer at high temperatures. As such, the polymer material (P) easily penetrates between the particles of the positive electrode active material, between particles of the positive electrode active material and particles of the conductive aid, and between particles of the conductive aid, which tends to cause partial blocking of the conductive paths.

(Average Particle Diameter (D50))

The polymer material (P) is in a powder state before being mixed with the positive electrode mixture. The average particle diameter (D50) of the particles of the polymer material (P) constituting the powder is 50 μm or less. As a result of the average particle diameter (D50) being set to 50 μm or less, the above-described average area, average perimeter, largest area, Voronoi variance, and the like can be easily controlled within desired numerical ranges. The average particle diameter (D50) is more desirably 40 μm or less, and further desirably 30 μm or less. The lower limit of the average particle diameter (D50) is not particularly limited, and may be 1 μm or more, for example.

Here, the average particle diameter (D50) of the polymer material (P) refers to the median diameter when the cumulative volume reaches 50% in a volume-based particle diameter distribution of the polymer material (P). The volume-based particle diameter distribution of the polymer material (P) can be measured, for example, using a particle diameter distribution measuring device of laser diffraction scattering type. A sample of the polymer material (P) to be measured may be prepared by separation from the positive electrode active material layer. Alternatively, if a raw material of the polymer material (P) prior to mixing with the positive electrode active material layer is available, the raw material of the polymer material (P) may be used.

(BET Specific Surface Area)

The BET specific surface area of the polymer material (P) is desirably 10 $m^2/g$ or less. The BET specific surface area is significantly influenced by the state of the particles themselves while being influenced by the particle diameter of the polymer material (P). For example, if the particles have many protrusions and indentations, or if the particles are porous, the BET specific surface area is large even when the average particle diameter (D50) is small. When the BET specific surface area is 10 $m^2/g$ or less, it is considered that the particle surface of the polymer material (P) has less protrusions and indentations or the particles do not have many voids. In this case, it is inferred that expansion stress strongly acts on the polymer material (P) in heating to increase diffusivity in heating. The BET specific surface area may be 5 $m^2/g$ or less, 2 $m^2/g$ or less, or 1.8 $m^2/g$ or less.

The BET specific surface area of the polymer material (P) is measured by a gas adsorption method (BET single-point method). Nitrogen gas is used as a gas. The details of the BET method should be conformed to JIS R1626. A sample of the polymer material (P) to be measured may be prepared by separation from the positive electrode active material layer. Alternatively, if a raw material of the polymer material (P) prior to mixing with the positive electrode active material layer is available, the raw material of the polymer material (P) may be used.

(Weight Average Molecular Weight (Mw))

The weight average molecular weight (Mw) of the polymer material (P) desirably satisfies Mw < 50000, and more desirably satisfies 5000 ≤ Mw < 50,000. As a result of the weight average molecular weight (Mw) satisfying Mw < 50,000 (further, 5000 ≤ Mw < 50,000), the melting rate of the polymer material (P) in heating is increased to increase dispersibility. Further, thermal decomposition tends to proceed to increase an effect of increasing resistance of the positive electrode active material layer. Mw is more desirably 30,000 or less, and further desirably 20,000 or less, and may be 15,000 or less.

The weight average molecular weight (Mw) of the polymer material (P) can be measured, for example, using ultra-high temperature gel permeation chromatography (GPC). Here, Mw is the weight average molecular weight based on polystyrene.

The measurement conditions using ultra-high temperature GPC are indicated below. An ultra-high temperature GPC system, SSC-7110 is used as a measuring device. As columns, one TSK guard column, HHR (S) HT, and two TSK gel columns, GMHHR-H (S) HT (7.8 mm I.D. * 30 cm), can be used. A differential refractometer (RI detector) is used as a detector. For sample pretreatment, a sample of the polymer material (P) is weighed, a predetermined amount of 1-chloronaphthalene (1-CN) is added as a solvent, and the resulting mixture is heated and dissolved at 250°C for 1 hour. Thereafter, hot filtration is performed using a PTFE filter having a pore diameter of 0.5 μm. A solution of the sample at a concentration of 2 mg/mL is injected in an amount of 500 μL. The flow rate is set to 1.0 mL/min. The measurement temperatures are set to a column temperature of 210°C and a pre-oven temperature of 250°C. Polystyrene is used as a molecular weight standard.

For the obtained data (peak), the entire peak is analyzed to calculate the weight average molecular weight, although the polymer material (P) on the low molecular weight side may partially overlap with the blank signal derived from a GPC eluent.

(Specific Examples of Polymer Material (P))

Preferred examples of the polymer material (P) will be described below.

Among polymer materials (P), a polymer material (P) (hereinafter also referred to as "polymer material (PS)") having a main chain having a phenylene group and a sulfide group has high chemical stability and is hardly bonded to other materials. Therefore, the particles of the positive electrode active material are not excessively coated in the positive electrode active material layer, and island-shaped regions are likely to form. In addition, the polymer material (PS) largely changes in state when melting at its melting point or higher and can exhibit a highly diffusive property in the positive electrode active material layer. When the polymer material (PS) is used, a sulfur atom can be used as a component derived from the polymer material (P) in element analysis such as SEM-EDX or SEM-EPMA.

The main chain of the polymer material (PS) has a repeating structure represented, for example, by formula:

[Chemical formula 1]

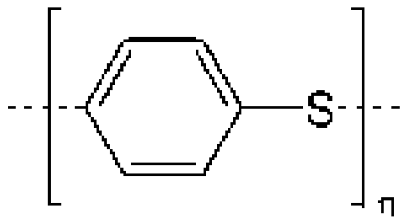

(where n is any integer). Usually, n is 20 or more, or 30 or more in polymer. Such a simple structure is highly chemically stable and produces little side reactions in the positive electrode active material layer. In addition, the polymer material (PS) having the structure represented by the above formulae is usually a linear polymer having no crosslinked structure, has a large degree of freedom in melting, and is highly diffusible in the positive electrode active material layer after melting. The polymer material (PS) having such a structure has a high insulating property and is considered to have a significant action of blocking the conductive paths when it penetrates between the particles of the positive electrode active material, between the particles of the positive electrode active material and the particles of the conductive aid, and between the particles of the conductive aid.

More specific examples of the polymer material (PS) include polyphenylene sulfide (hereinafter also referred to as "PPS").

The polymer material (P) may contain chloride ions with a mass ratio of 10 ppm or more and 1000 ppm or less, or 10 ppm or more and 500 ppm or less. The amount of the chloride ions contained in the polymer material (P) can be measured, for example, by peeling off the positive electrode active material layer from the positive electrode, separating the polymer material (P) from the positive electrode active material layer, and performing analysis by ion chromatography using deionized water as a solvent.

The amount of the polymer material (P) contained in the positive electrode active material layer can be small. The content of the polymer material contained in the positive electrode active material layer may be, for example, 0.01% by mass or more and 5% by mass or less, 0.1% by mass or more and 5% by mass or less, 0.3% by mass or more and 3% by mass or less, or 0.5% by mass or more and 2% by mass or less.

The polymer material (P) may be unevenly distributed toward the outermost surface (i.e., on the separator side) of the positive electrode active material layer, rather than toward the positive electrode current collector. Internal short circuits in batteries often begin to develop on the separator side of the positive electrode active material layer. An internal short circuit occurs, for example, upon a conductive foreign substance penetrating the separator. Uneven distribution of the polymer material (P) on the separator side of the positive electrode active material layer can form a high resistance area on the separator side of the positive electrode active material layer at an early stage after occurrence of the short circuit. Thus, enlargement of the short circuit can be suppressed.

More specifically, given that T represents the thickness of the positive electrode active material layer, a presence probability Pb and a presence probability Pt should satisfy $1 < Pt/Pb$, for example. Here, the presence probability Pb is the presence probability of the polymer material (P) being present in the region of the positive electrode active material layer extending from the surface of the positive electrode current collector to a depth of 0.5T in the positive electrode active material, and the presence probability Pt is the presence probability of the polymer material (P) being present in the region of the positive electrode active material layer extending from a depth of 0.5T from the surface of the positive electrode current collector to the outermost surface of the positive electrode active material layer (i.e., the surface of the positive electrode active material layer on the separator side). They may satisfy $1.2 \leq Pt/Pb$ or may satisfy $2 \leq Pt/Pb$.

By contrast, the polymer material (P) may be unevenly distributed on the positive electrode current collector side, rather than on the outermost surface side (i.e., on the separator side), of the positive electrode active material layer. The short-circuit current of a battery is large and easily flows in the positive electrode active material layer toward the positive electrode current collector which has the lowest resistance. Uneven distribution of the polymer material (P) toward the positive electrode current collector in the positive electrode active material layer can achieve selective increase in

resistance in a low resistance area of the positive electrode active material layer. Thus, an increase in the short-circuit current can be suppressed.

More specifically, given that T represents the thickness of the positive electrode active material layer, a presence probability Pb and a presence probability Pt should satisfy 1 < Pb/Pt, for example. Here, the presence probability Pb is the presence probability of the polymer material (P) being present in the region of the positive electrode active material layer extending from the surface of the positive electrode current collector to a depth of 0.5T in the positive electrode active material, and the presence probability Pt is the presence probability of the polymer material (P) being present in the region of the positive electrode active material layer extending from a depth of 0.5T from the surface of the positive electrode current collector to the outermost surface of the positive electrode active material layer (i.e., the surface of the positive electrode active material layer on the separator side). They may satisfy 1.2 ≤ Pb/Pt or may satisfy 2 ≤ Pb/Pt.

Hereinafter, the region of the positive electrode active material layer extending from the surface of the positive electrode current collector to a depth of 0.5T in the positive electrode active material layer is referred to as "lower layer region", and the region of the positive electrode active material layer extending from a depth of 0.5T from the surface of the positive electrode current collector to the outermost surface of the positive electrode active material layer is referred to as "upper layer region".

When 1 < Pt/Pb is satisfied, the "observation area" should be set to a region located as close to the center as possible, including the center of the "upper layer region" in the thickness direction. While on the same time, when 1 < Pb/Pt is satisfied, the "observation area" should be set to a region as close to the center as possible, including the center of the "lower layer region" in the thickness direction. In addition, when the above-described uneven distribution is not substantially observed in the distribution of the polymer material (P), the "observation area" should be set to a region as close to the center as possible, including the center of the entire thickness T of the positive electrode active material layer (at a point of a depth of 0.5T from the surface of the positive electrode current collector).

As described above, when the polymer material (P) is unevenly distributed in one of the "lower layer region" and the "upper layer region," the content of the polymer material (P) contained in the other region can be very small. In other words, with the presence of a small amount of the polymer material (P), resistance of the positive electrode active material layer when heated can be efficiently increased and expansion of a short-circuit part and increase in the short-circuit current can be suppressed. Such a structure is desirable in terms of ease of maintaining a high capacity of the positive electrode.

Pb and Pt can be measured by analyzing a cross-sectional sample of the positive electrode, which is obtained by the method described above, by SEM and EDX (or EPMA). Specifically, a mapped image of the polymer material (P) obtained from analysis data by EDX of the cross-sectional sample is prepared. In the mapped image of the lower layer region and the upper layer region, the area occupied by a component (e.g., sulfur element) derived from the polymer material (P) is measured as the area of the polymer material (P). The ratios of the area of the polymer material (P) to the area of the lower layer region and to the area of the upper layer region are regarded as Pb and Pt, respectively. Pb and Pt may be measured in a rectangular observation area defined by a length of 300 μm of the positive electrode active material layer in the surface direction and a thickness T of the positive electrode active material layer. Pb and Pt may be averages of a plurality of Pb and a plurality of Pt obtained in a plurality of (e.g., 3 or more) observation areas, respectively.

The polymer material (P) may be overcoated to be unevenly distributed toward the outermost surface of the positive electrode active material layer (i.e., toward the separator). In this case, given that T represents the thickness of the positive electrode active material layer, a presence probability Pb(q) of the polymer material (P) being present in the region of the positive electrode active material layer extending from the surface of the positive electrode current collector to a depth of 0.25T in the positive electrode active material layer and a presence probability Pt(q) of the polymer material (P) being present in the region of the positive electrode active material layer extending from a depth of 0.75T from the surface of the positive electrode current collector to the outermost surface of the positive electrode active material layer (i.e., the surface of the positive electrode active material layer on the separator side) may satisfy 5 ≤ Pt(q)/Pb(q) ≤ 250.

<Positive Electrode Production Method>

One example of a method for producing the positive electrode according to the present disclosure embodiment will be described next.

The production method includes: a step (I) of preparing a positive electrode slurry containing a positive electrode active material, a binder, a conductive aid, a polymer material (P), and a dispersion medium; a step (II) of preparing a positive electrode current collector; a step (III) of applying the positive electrode slurry to a surface of the positive electrode current collector to form a coated film; a step (IV) of drying the coated film to form an unrolled layer; and a step (V) of rolling the unrolled layer to form a positive electrode active material layer.

(I) Step of Preparing Slurry

The positive electrode slurry is prepared by mixing a positive electrode mixture containing a positive electrode

active material, a binder, a conductive aid, and a polymer material (P) with a liquid dispersion medium to disperse the mixture in the dispersion medium. The positive electrode mixture may further contain another component. As the liquid dispersion medium, an organic solvent having excellent affinity with the binder is used.

The average area, average perimeter, Voronoi variance, largest area, and the like of the island-shaped regions formed of the polymer material (P) can be controlled by changing the dispersion state of the polymer material (P) in the positive electrode slurry. Dry pre-mixing of the polymer material (P) with the positive electrode active material tends to remarkably increase the dispersibility of the polymer material (P). However, the method of preparing the positive electrode slurry is not particularly limited as long as a desired dispersion state of the polymer material (P) can be achieved. For example, it is possible that the polymer material (P) is wet-mixed with the conductive aid in advance, and then the positive electrode active material is added to the mixture, followed by further mixing.

As the organic solvent, N-methyl-2-pyrrolidone (NMP) is preferably used, but an alcohol such as ethanol, an ether such as tetrahydrofuran, an amide such as dimethylformamide, or a ketone such as cyclohexanone may be used, for example.

It is desirable to use as the binder fluorocarbon resin or hydrogenated nitrile butadiene rubber, for example, but the binder is not particularly limited as long as it has high binding strength and is stable in the positive electrode active material layer. Examples of the fluorocarbon resin include polyvinylidene fluoride (PVDF), polytetrafluoroethylene (PTFE), perfluoroalkoxyalkane (PFA), tetrafluoroethylene-hexafluoropropylene copolymers (FEP), ethylene-tetrafluoroethylene copolymers (ETFE), and vinylidene fluoride-hexafluoropropylene copolymers. Among these, PVDF is preferable.

(II) Step of Preparing Positive Electrode Current Collector

As the positive electrode current collector, a sheet-shaped conductive material (e.g., a metal foil, mesh, net, or a punched sheet) is used. Among these, a metal foil is preferable. Examples of the material of the positive electrode current collector include stainless steel, aluminum, aluminum alloys, and titanium. The thickness of the positive electrode current collector is not particularly limited, and is, for example, 1 to 50 μm, and may be 5 to 30 μm.

(II) Step of Forming Coated Film of Positive Electrode Slurry

A coated film is formed by applying the positive electrode slurry to the surface of the positive electrode current collector. Examples of a coater for the positive electrode slurry that can be used include a bar coater, a gravure coater, a blade coater, a roll coater, a comma coater, a die coater, and a lip coater. When the polymer material (P) is unevenly distributed in the lower layer region or the upper layer region of the positive electrode active material layer, the concentration of the polymer material (P) may be changed in the thickness direction in a manner that a plurality of positive electrode slurries having different contents of the polymer material (P) are prepared, followed by application of two or more layers of the slurries.

(IV) Step of Drying Coated Film

Next, the coated film is dried to volatilize the dispersion medium, thereby forming an unrolled coated film. For example, when the coated film is dried at a temperature of 150°C or higher, or even 180°C or higher, the polymer material (P) is more likely to be unevenly distributed toward the separator, than toward the positive electrode current collector, in the positive electrode active material layer.

(V) Step of Rolling Unrolled Layer

The unrolled layer is then rolled to form a positive electrode active material layer. Although the conditions of rolling are not particularly limited, the density of the positive electrode active material in the positive electrode active material layer is, for example, 3.3 g/$cm^3$ or more and 4.0 g/$cm^3$ or less, and may be 3.5 g/$cm^3$ or more and 4.0 g/$cm^3$ or less.

B. Secondary Battery

The nonaqueous electrolyte secondary battery according to an embodiment of the present disclosure includes the above-described positive electrode, a negative electrode, a nonaqueous electrolyte, and a separator provided between the positive electrode and the negative electrode. The nonaqueous electrolyte secondary battery may be a liquid secondary battery containing a liquid electrolyte as the electrolyte, or an all-solid-state secondary battery containing a solid electrolyte as the electrolyte. Hereinafter, the configuration of the secondary battery will be described in detail by exemplifying a lithium-ion secondary battery.

[Positive Electrode]

As the positive electrode, a positive electrode having the above-described characteristics is used. The positive electrode active material layer is constituted of a positive electrode mixture. The positive electrode mixture contains a positive electrode active material, a binder, and the polymer material (P) as essential components, and may contain an optional component. Examples of the optional component may include a conductive aid and a thickener.
The thickness of the positive electrode active material layer is not particularly limited, and may be, for example, 50 μm or more and 150 μm or less, or 75 μm or more and 125 μm or less. The positive electrode active material layer may be formed of a plurality of layers having different structures. For example, two or more layers containing positive electrode active materials having different average particle diameters may be layered, or two or more layers having different types or compositions of positive electrode active materials may be layered.
The average particle diameter (D50) of the particles of the positive electrode active material is, for example, 1 μm or more and 50 μm or less, and may be 5 μm or more and 25 μm or less. Here, the average particle diameter (D50) also refers to the median diameter when the cumulative volume reaches 50% in a volume-based particle diameter distribution.
The average particle diameter of the positive electrode active material may be measured from the cross-sectional sample of the positive electrode active material layer described above. It is possible that a SEM image of the cross section is captured so that 10 or more particles of the positive electrode active material are observed, the diameters of the equivalent circles having the same areas as those of the cross sections of the 10 or more the positive electrode active material particles are obtained by image processing, and the average of these is taken as an average particle diameter.
The positive electrode active material may contain a lithium-containing transition metal oxide. From the viewpoint of capacity enhancement, it is desirable that the lithium-containing transition metal oxide contains a lithium nickel oxide (a composite oxide N) having a layered rock salt-type crystal structure containing lithium and Ni. The ratio of the composite oxide N to the positive electrode active material is, for example, 70% by mass or more, and may be 90% by mass or more, or 95% by mass or more. The ratio of Ni to a metal element other than Li contained in the composite oxide N may be 50 at.% or more.
The composite oxide N is represented by formula (1): $Li_{\alpha}Ni_{x1}M1_{x2}M2_{(1-x1-x2)}O_{2+\beta}$, for example. Here, an element M1 is at least one selected from the group consisting of V, Co, and Mn. An element M2 is at least one selected from the group consisting of Mg, Al, Ca, Ti, Cu, Zn, and Nb. In this regard, formula (1) satisfies $0.95 \leq \alpha \leq 1.05$, $-0.05 \leq \beta \leq 0.05$, $0.5 \leq x1 < 1$, $0 \leq x2 \leq 0.5$, and $0 < 1 - x1 - x2 \leq 0.5$. $\alpha$ increases and decreases with charging and discharging.
The composite oxide N contains Ni and may contain at least one selected from the group consisting of Co, Mn, and Al as the element M1 and the element M2. Co, Mn, and Al contribute to stabilization of the crystal structure of the composite oxide N.
From the viewpoint of cost reduction and capacity enhancement, the proportion of Co in the metal element contained in composite oxide N other than Li is desirably 0 at.% or more and 20 at.% or less, and more desirably 0 at.% or more and 15 at.% or less.
The proportion of Mn in the metal element other than Li may be 10 at.% or less or 5 at.% or less. The proportion of Mn in the metal elements other than Li may be 1 at.% or more, 3 at.% or more, or 5 at.% or more.
The proportion of Al in the metal element other than Li may be 10 at.% or less, or 5 at.% or less. The proportion of Al in the metal element other than Li may be 1 at.% or more, 3 at.% or more, or 5 at. % or more.
The composite oxide N can be represented by, for example, formula (2): $Li_{\alpha}Ni_{(1-y1-y2-y3-z)}Co_{y1}Mn_{y2}Al_{y3}M_{z}O_{2+\beta}$. An element M is an element other than Li, Ni, Co, Mn, Al, and oxygen, and may be at least one selected from the group consisting of Ti, Zr, Nb, Mo, W, Fe, Zn, B, Si, Mg, Ca, Sr, Sc, and Y However, formula (2) satisfies $0.95 \leq \alpha \leq 1.05$, $-0.05 \leq \beta \leq 0.05$, $0 \leq y1 \leq 0.1$, $0 \leq y2 \leq 0.1$, $0 \leq y3 \leq 0.1$, and $0 \leq z \leq 0.10$. 1-y1-y2-y3-z (= v) representing the atomic ratio of Ni is, for example, 0.8 or more, and may be 0.85 or more, 0.90 or more, or 0.95 or more. Further, v representing the atomic ratio of Ni may be 0.98 or less, or 0.95 or less.
Examples of the conductive aid that may be contained as an optional component in the positive electrode active material layer include carbon nanotubes (CNT), carbon fibers other than CNT, and conductive particles (e.g., carbon black and graphite).

[Negative Electrode]

The negative electrode includes at least a negative electrode current collector, and includes, for example, the negative electrode current collector and a negative electrode active material layer. The negative electrode active material layer is carried on one or both surfaces of the negative electrode current collector.
The negative electrode active material layer may be a negative electrode mixture layer constituted of a negative electrode mixture. The negative electrode mixture layer is in the form of a membrane or a film. The negative electrode mixture contains particles of a negative electrode active material as an essential component, and can optionally contain, for example, a binder, a conductive aid, and a thickener. Alternatively, a lithium metal foil or a lithium alloy foil may be

attached to the negative electrode current collector as the negative electrode active material layer.

The negative electrode mixture layer can be formed, for example, by applying a negative electrode slurry in which a negative electrode mixture containing particles of a negative electrode active material, a binder, and the like are dispersed in a dispersion medium to a surface of the negative electrode current collector and drying the slurry. The applied coated film may be rolled if necessary.

The negative electrode active material includes a material that electrochemically absorbs and releases lithium ions, a lithium metal, and a lithium alloy, for example. Examples of the material that electrochemically absorbs and releases lithium ions include carbon materials and alloy-based materials. Examples of the carbon materials include graphite, graphitizable carbon (soft carbon), and non-graphitizable carbon (hard carbon). Among these, graphite, which is excellent in stability during charging and discharging and has a small irreversible capacity, is preferable. Examples of the alloy-based materials include those containing at least one metal capable of forming an alloy with lithium, and specific examples thereof include silicon, tin, silicon alloys, tin alloys, and silicon compounds. Silicon oxide, tin oxide, or the like may be used, or another silicon-containing material may be used.

As the negative electrode current collector, a non-porous conductive substrate (e.g., a metal foil) or a porous conductive substrate (e.g., mesh, net, or a punched sheet) is used, for example. Examples of the material of the negative electrode current collector include stainless steel, nickel, nickel alloys, copper, and copper alloys.

The binder may be, for example, styrene-butadiene rubber, but is not particularly limited.

Examples of the conductive aid include carbon nanotubes (CNT), carbon fibers other than CNT, and conductive particles (e.g., carbon black and graphite).

Examples of the thickener include: carboxymethyl cellulose (CMC) and its modified products (including salts such as Na salt); cellulose derivatives such as cellulose ethers (e.g., methyl cellulose); saponified products of a polymer having a vinyl acetate unit, such as polyvinyl alcohol; and polyethers (e.g., polyalkylene oxide such as polyethylene oxide).

[Separator]

The separator is provided between the positive electrode and the negative electrode. The separator has high ion permeability and moderate mechanical strength and insulating property. Examples of the separator include microporous thin films, woven fabrics, and nonwoven fabrics. As the material of the separator, polyolefin such as polypropylene or polyethylene is used, for example.

The thickness of the separator may be 5 μm to 25 μm, for example.

The separator may include a base layer and a heat-resistant layer layered on the base layer. The base layer may be a microporous thin film, a woven fabric, or a nonwoven fabric, for example. The heat-resistant layer can be provided on at least one surface of the base layer. The heat-resistant layer is preferably provided on at least the positive electrode side of the separator.

Here, the melting point or thermal decomposition temperature (diffusion temperature) of the polymer material (P) is desirably equal to or higher than the melting point of the base layer. As the material of the base layer, thermoplastic resins having a melting point can be typically used. Among these, polyolefin such as polypropylene or polyethylene is preferably used. In general, a base layer constituted of a thermoplastic resin is equipped with a shutdown function that closes gaps of the base layer when reaching a temperature exceeding a predetermined temperature. In other words, until the shutdown function is activated, a current is allowed to flow in the battery and the battery is required to exhibit sufficient performance as a power supply. If the diffusion temperature of the polymer material (P) is lower than the melting point of the base layer, the resistance of the positive electrode active material layer increases due to the presence of the polymer material (P), which may hinder sufficient performance as a power source.

The heat-resistant layer may contain an inorganic oxide filler as a main component (e.g., 80% by mass or more of the heat-resistant layer), or may contain a heat-resistant resin as a main component (e.g., 40% by mass or more of the heat-resistant layer). As the heat-resistant resin, polyamide resin such as aromatic polyamide (aramid), polyimide resin, or polyamide-imide resin may be used.

The thickness of the base layer may be 0% to 100% of the thickness of the separator, and may be 5 μm to 20 μm, for example. When the thickness of the base layer is 0% (when the base material layer is absent), a separator constituted of only a heat-resistant layer may be used.

The thickness of the heat-resistant layer may be 0% to 100% of the thickness of the separator, and may be 0 μm to 15 μm, for example.

[Nonaqueous Electrolyte]

The nonaqueous electrolyte of the lithium-ion secondary battery has lithium-ion conductivity. The nonaqueous electrolyte may be a liquid electrolyte (electrolyte liquid) or an all-solid-state electrolyte.

As the solid electrolyte, a solid-state or gel-state polymer electrolyte, or an inorganic solid-state electrolyte can be

used, for example. As the inorganic solid electrolyte, a known material (e.g., an oxide-based solid electrolyte, a sulfide-based solid electrolyte, or a halogen-based solid electrolyte) for all-solid-state lithium-ion secondary batteries can be used, for example. The polymer electrolyte contains, for example, a lithium salt and a matrix polymer, or a nonaqueous solvent, a lithium salt, and a matrix polymer. As the matrix polymer, a polymer material that gels by absorbing a nonaqueous solvent is used, for example. Examples of the polymer material include fluorocarbon resin, acrylic resin, and polyether resin.

The liquid electrolyte contains a nonaqueous solvent and an electrolyte salt. In a case of a lithium-ion secondary battery, the electrolyte salt includes at least a lithium salt. The concentration of the lithium salt in the liquid electrolyte is 0.5 mol/L or more and 2 mol/L or less, for example. The nonaqueous electrolyte may contain a known additive.

Examples of the nonaqueous solvent include cyclic carbonate esters, linear carbonate esters, and cyclic carboxylate esters. Examples of the cyclic carbonate esters include propylene carbonate (PC) and ethylene carbonate (EC). Examples of the linear carbonate esters include diethyl carbonate (DEC), ethyl methyl carbonate (EMC), and dimethyl carbonate (DMC). Examples of the cyclic carboxylate esters include $\gamma$-butyrolactone (GBL) and $\gamma$-valerolactone (GVL). The nonaqueous solvent may be used alone, or two or more types thereof may be used in combination.

Examples of the lithium salt include lithium salts of chlorine-containing acids (e.g., $LiClO_4$, $LiAlCl_4$, and $LiB_{10}Cl_{10}$), lithium salts of fluorine-containing acids (e.g., $LiPF_6$, $LiBF_4$, $LiSbF_6$, $LiAsF_6$, $LiCF_3SO_3$, and $LiCF_3CO_2$), lithium salts of fluorine-containing acid imides (e.g., $LiN\ (SO_2F)_2$, $LiN(CF_3SO_2)_2$, $LiN(CF_3SO_2)(C_4F_9SO_2)$, and $LiN(C_2F_5SO_2)_2$), and lithium halides (e.g., LiCl, LiBr, and LiI). These lithium salts may be used alone, or two or more types thereof may be used in combination.

An example of the configuration of the secondary battery is a configuration in which an electrode group formed of the positive electrode and the negative electrode wound together with the separator in between is housed in an outer casing together with the liquid electrolyte. However, the configuration is not limited to this, and any other forms of the electrode group may be applied. For example, a stack electrode group in which the positive electrode and the negative electrode are stacked via the separator may be used. The form of the secondary battery is also not limited, and may be cylindrical, prismatic, coin-shaped, button-shaped, or laminated, for example.

The configuration of the secondary battery will be described below with reference to FIG. 1. FIG. 1 is a longitudinal cross-sectional view of a cylindrical nonaqueous secondary battery 10 which is an example of the present embodiment. However, the present disclosure is not limited to the following configuration.

The secondary battery 10 includes an electrode group 18, a liquid electrolyte (not illustrated), and a bottomed cylindrical battery can 22 that houses these. A sealing body 11 is crimped and fixed to the opening of the battery can 22 via a gasket 21. Thus, the interior of the battery is sealed. The sealing body 11 includes a valve body 12, a metal plate 13, and an annular insulating member 14 provided between the valve body 12 and the metal plate 13. The valve body 12 and the metal plate 13 are connected to each other at their respective central parts. A positive electrode lead 15a led from the positive electrode plate 15 is connected to the metal plate 13. In the above configuration, the valve body 12 functions as an external terminal of the positive electrode. A negative electrode lead 16a led from the negative electrode plate 16 is connected to the inner bottom surface of the battery can 22. An annular groove 22a is formed in the vicinity of the open end of battery can 22. A first insulating plate 23 is provided between one of the end surfaces of the electrode group 18 and the annular groove 22a. A second insulating plate 24 is provided between the other end surface of the electrode group 18 and the bottom of the battery can 22. The electrode group 18 is formed of the positive electrode plate 15 and the negative electrode plate 16 wound together with the separator 17 in between.

(Supplemental Remarks)

According to the above description, the following techniques are disclosed.

(Technique 1)
A nonaqueous electrolyte secondary battery comprising:

a positive electrode; a negative electrode; a nonaqueous electrolyte; and a separator provided between the positive electrode and the negative electrode,
wherein the positive electrode includes a positive electrode current collector and a positive electrode active material layer carried on the positive electrode current collector,
the positive electrode active material layer contains a positive electrode active material, a binder, and an additive,
the additive is a polymer material having a melting point or thermal decomposition temperature of 200°C or higher and 500°C or lower,
in a cross section of the positive electrode active material layer, the polymer material forms and is dispersed as a plurality of island-shaped regions, and
an average particle diameter of the polymer material is 50 $\mu$m or less.

(Technique 2)
The nonaqueous electrolyte secondary battery according to Technique 1, wherein an average perimeter of the island-shaped regions is 60 μm or less.
(Technique 3)
The nonaqueous electrolyte secondary battery according to Technique 1 or 2, wherein a variance of a Voronoi diagram is $2 \times 10^7$ $\mu m^4$ or less, the Voronoi diagram being obtained by Voronoi tessellation of the cross section of the positive electrode active material layer for the island-shaped regions.
(Technique 4)
The nonaqueous electrolyte secondary battery according to any one of Techniques 1 to 3, wherein an average area of top three largest of the island-shaped regions is 900 $\mu m^2$ or less.
(Technique 5)
The nonaqueous electrolyte secondary battery according to any one of Techniques 1 to 4, wherein an average area of the island-shaped regions is 200 $\mu m^2$ or less.
(Technique 6)
The nonaqueous electrolyte secondary battery according to any one of Techniques 1 to 5, wherein a BET specific surface area of the polymer material is 10 $m^2/g$ or less.
(Technique 7)
The nonaqueous electrolyte secondary battery according to any one of Techniques 1 to 6, wherein a weight average molecular weight (Mw) of the polymer material satisfies $Mw < 50,000$.
(Technique 8)
The nonaqueous electrolyte secondary battery according to any one of Techniques 1 to 7, wherein the polymer material has a main chain having a phenylene group and a sulfide group.
(Technique 9)
The nonaqueous electrolyte secondary battery according to any one of Techniques 1 to 8, wherein the main chain has a repeating structure represented by formula:

[Chemical formula 1]

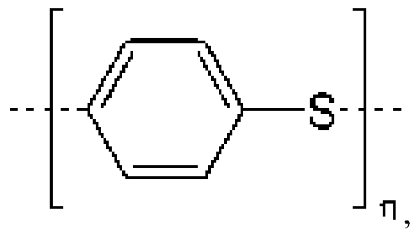

where n is any integer.
(Technique 10)
The nonaqueous electrolyte secondary battery according to any one of Techniques 1 to 9, wherein the polymer material contains polyphenylene sulfide.
(Technique 11)
The nonaqueous electrolyte secondary battery according to any one of Techniques 1 to 10, wherein the polymer material contains chloride ions with a mass ratio of 10 ppm or more and 1000 ppm or less.
(Technique 12)
The nonaqueous electrolyte secondary battery according to any one of Techniques 1 to 11, wherein a content of the polymer material contained in the positive electrode active material layer is 0.01% by mass or more and 5% by mass or less.
(Technique 13)
The nonaqueous electrolyte secondary battery according to any one of Techniques 1 to 12, wherein given that T represents a thickness of the positive electrode active material layer, Pb and Pt satisfy $1 < Pt/Pb$, Pb representing a presence probability of the polymer material being present in a region of the positive electrode active material layer extending from a surface of the positive electrode current collector to a depth of 0.5T in the positive electrode active material layer, Pt representing a presence probability of the polymer material being present in a region of the positive electrode active material layer extending from a depth of 0.5T from the surface of the positive electrode current collector to an outermost surface of the positive electrode active material layer.
(Technique 14)
The nonaqueous electrolyte secondary battery according to any one of Techniques 1 to 13, wherein given that T represents a thickness of the positive electrode active material layer, Pb and Pt satisfy $1 < Pb/Pt$, Pb representing a

presence probability of the polymer material being present in a region of the positive electrode active material layer extending from a surface of the positive electrode current collector to a depth of 0.5T in the positive electrode active material layer, Pt representing a presence probability of the polymer material being present in a region of the positive electrode active material layer extending from a depth of 0.5T from the surface of the positive electrode current collector to an outermost surface of the positive electrode active material layer.

(Technique 15)

The nonaqueous electrolyte secondary battery according to any one of Techniques 1 to 14, wherein the separator includes a base layer and a heat-resistant layer layered on the base layer, and
a melting point or thermal decomposition temperature of the polymer material is equal to or higher than a melting point of the base layer.

(Technique 16)

The nonaqueous electrolyte secondary battery according to any one of Techniques 1 to 15, wherein the positive electrode active material contains a lithium-containing transition metal oxide,

the lithium-containing transition metal oxide contains a lithium nickel oxide having a layered rock salt-type crystal structure containing lithium and Ni, and
a content of the Ni in a metal element other than Li contained in the lithium-nickel oxide is 50 at.% or more.

(Technique 17)

The nonaqueous electrolyte secondary battery according to any one of Techniques 1 to 16, wherein the lithium nickel oxide is represented by formula: $Li_{\alpha}Ni_{x1}M1_{x2}M2_{(1-x1-x2)}O_{2+\beta}$,

the element M1 is at least one selected from the group consisting of V, Co, and Mn,
the element M2 is at least one selected from the group consisting of Mg, Al, Ca, Ti, Cu, Zn and Nb, and

$$0.95 \leq \alpha \leq 1.05,$$

$$-0.05 \leq \beta \leq 0.05,$$

$$0.5 \leq x1 < 1,$$

$$0 \leq x2 \leq 0.5,$$

and

$$0 < 1 - x1 - x2 \leq 0.5$$

are satisfied.

(Technique 18)

The nonaqueous electrolyte secondary battery according to any one of Techniques 1 to 17, wherein the binder contains at least one selected from the group consisting of fluorocarbon resin and hydrogenated nitrile butadiene rubber.

(Technique 19)

A positive electrode for a secondary battery comprising

a positive electrode active material layer containing a positive electrode active material, a binder, and an additive,
wherein the additive is a polymer material having a melting point or thermal decomposition temperature of 200°C or higher and 500°C or lower,
in a cross section of the positive electrode active material layer, the polymer material forms and is dispersed as a plurality of island-shaped regions, and
an average particle diameter of the polymer material is 50 μm or less.

Hereinafter, the present disclosure will be described based on samples of experimental examples. However, the present disclosure is not limited to the following examples.

<<Sample A1>>

[Positive Electrode Production]

As a positive electrode active material, a composite oxide N ($LiNi_{0.85}Co_{0.10}Al_{0.05}O_2$) having an average particle diameter of 13 μm was used. As a positive electrode current collector, an aluminum foil having a thickness of 15 μm was prepared.

NMP was added to a positive electrode mixture and the resultant mixture was stirred to prepare a positive electrode slurry. The positive electrode mixture contained the positive electrode active material, acetylene black, and polyvinylidene fluoride (PVDF) in a mass ratio of 95:2.5:2.5 and contained polyphenylene sulfide (PPS) (average particle diameter (D50) = 10 μm, weight average molecular weight 28,000, BET specific surface area 1.1 $m^2$/g, melting point 280°C, content of chloride ions 50 ppm) with a content of 1.3% by mass.

The positive electrode slurry was applied to the aluminum foil being the positive electrode current collector and the resulting coated film was dried, thereby forming an unrolled layer on both surfaces of the aluminum foil. At that time, the drying temperature was controlled to 50°C so that the distribution of the PPS in a to-be-formed positive electrode active material layer was not unevenly distributed in the lower layer region or the upper layer region. The layer was left to dry.

The unrolled layer was then rolled to form a positive electrode active material layer having a density of the positive electrode active material of 3.6 g/$cm^3$. The entire thickness of the positive electrode after the rolling was 160 μm.

The average area of the island-shaped regions of the polymer material (P) determined in the manner described above was 11 $\mu m^2$.

[Negative Electrode Production]

A negative electrode slurry was prepared by adding water to a negative electrode mixture containing graphite being a negative electrode active material, sodium carboxymethyl cellulose (CMC-Na), and styrene-butadiene rubber (SBR) in a mass ratio of 96:2:2, and stirring the resulting mixture. Next, the negative electrode slurry was applied to a copper foil being a negative electrode current collector, and the resulting coated film was dried and rolled, thereby forming a negative electrode active material layer on both surfaces of the copper foil. The density of the negative electrode active material of the negative electrode active material layer was adjusted to 1.6 g/$cm^3$. The entire thickness of the negative electrode was 170 μm.

[Nonaqueous Electrolyte Preparation]

A nonaqueous electrolyte was prepared by dissolving $LiPF_6$ in a mixed solvent at a concentration of 1.0 mol/L. The mixed solvent contained ethylene carbonate (EC) and diethyl carbonate (DEC) in a volume ratio of 3:7.

[Secondary Battery Production]

An electrode group was prepared by attaching tabs to the respective electrodes and spirally winding the positive electrode and the negative electrode via a separator (thickness 14 μm) so that the tabs were positioned at the outermost periphery. The separator included a base layer of a 10 μm thick microporous thin film made of polyethylene, and a 4 μm thick heat-resistant layer layered on one side (positive electrode side) of the base layer. The melting point of the microporous thin film was 150°C. The heat-resistant layer contained 20% by mass of an inorganic oxide filler (alumina) with the rest being aromatic polyamide (aramid). The electrode group was inserted into an outer casing of an aluminum laminate film, and vacuum-dried at 105°C for 2 hours. The liquid electrolyte was injected into the outer casing, and then the opening of the outer casing was sealed. Thus, a secondary battery sample A1 was obtained.

<<Sample B1>>

A sample B1 of the secondary battery was produced in the same manner as the sample A1, except that the positive electrode mixture did not contain the polymer material (P).

<<Samples A2 to A4 and B2>>

Samples A2 to A4 and B2 of the secondary battery were produced in the same manner as the sample A1, except that the average area of the island-shaped regions was changed to those shown in Table 1 by changing the content of the polymer (P) contained in the positive electrode mixture and the stirring condition in the positive electrode slurry preparation.

[Evaluation]

The samples obtained were evaluated as follows.

(a) In an environment at 25°C, each of the battery samples was subjected to constant current charging at a current of 0.3 It until the voltage reached 4.2 V, and then subjected to constant voltage charging at a voltage of 4.2 V until the current reached 0.05 It.
(b) In an environment at 25°C, the tip of a round nail (diameter 2.7 mm) was brought into contact with the center of the battery sample charged in (a), and was allowed to pierce at a rate of 1 mm/sec. Then, the round nail piercing was stopped immediately after voltage drop (Δ 50 mV) of the battery due to an internal short circuit was detected. The surface temperature of the battery sample was measured 1 minute after the occurrence of the short circuit. The surface temperatures of the samples A1 to A4, B1, and B2 are shown in Table 1.

[Table 1]

| Secondary battery | Additive | Content of PPS (% by mass) | Average area ($\mu m^2$) | Uneven distribution | Surface temperature (°C) |
|---|---|---|---|---|---|
| B1 | - | 0 | - | - | 72 |
| A1 | PPS | 0.65 | 20 | Not observed | 38 |
| A2 | PPS | 0.65 | 72 | Not observed | 40 |
| A3 | PPS | 1.30 | 180 | Not observed | 53 |
| A4 | PPS | 0.65 | 200 | Not observed | 59 |
| B2 | PPS | 0.65 | 250 | Not observed | 80 < |

Table 1 shows that the surface temperatures of the samples A1 to A4 were significantly lower than those of the samples B1 and B2. It can be understood from the above that safety upon occurrence of an internal short circuit was enhanced with minimal effect on battery capacity.

<<Samples R1a to R4a and Sample CRa>>

Samples R1a to R4a and CRa of the secondary battery were produced and evaluated in the same manner as the sample A1, except that the average perimeter of the island-shaped regions was changed to those shown in Table 2 by approximately changing the content of the polymer material (P) contained in the positive electrode mixture and the stirring condition in the positive electrode slurry preparation.

[Table 2]

| Secondary battery | Additive | Content of PPS (% by mass) | Average perimeter (μm) | Uneven distribution | Surface temperature (°C) |
|---|---|---|---|---|---|
| B1 | - | 0 | - | - | 72 |
| R1a | PPS | 0.65 | 15 | Not observed | 38 |
| R2a | PPS | 0.65 | 35 | Not observed | 42 |
| R3a | PPS | 1.30 | 35 | Not observed | 46 |
| R4a | PPS | 0.65 | 60 | Not observed | 40 |
| CRa | PPS | 0.65 | 80 | Not observed | 80 < |

Table 2 shows that the surface temperatures of the samples R1a to R4a were significantly lower than those of the samples B1 and B2, and also lower than those of the samples A3 and A4. It can be understood from the above that safety upon occurrence of an internal short circuit was further enhanced with minimal effect on battery capacity.

<<Samples R1b to R4b and Sample CRb>>

Samples R1b to R4b and CRb of the secondary battery were produced and evaluated in the same manner as the sample A1, except that the Voronoi variance of the island-shaped regions was changed to those shown in Table 3 by appropriately changing the content of the polymer material (P) contained in the positive electrode mixture and the stirring condition in the positive electrode slurry preparation.

[Table 3]

| Secondary battery | Additive | Content of PPS (% by mass) | Voronoi variance ($\mu m^2$) | Uneven distribution | Surface temperature (°C) |
|---|---|---|---|---|---|
| B1 | - | 0 | - | - | 72 |
| R1b | PPS | 0.65 | $1 \times 10^3$ | Not observed | 48 |
| R2b | PPS | 0.65 | $1 \times 10^3$ | Not observed | 42 |
| R3b | PPS | 1.30 | $1 \times 10^5$ | Not observed | 42 |
| R4b | PPS | 0.65 | $1 \times 10^7$ | Not observed | 53 |
| CRb | PPS | 0.65 | $2 \times 10^7$ | Not observed | 80 < |

Table 3 shows that the surface temperatures of the samples R1b to R4b were significantly lower than those of the samples B1 and B2. It can be understood from the above that safety upon occurrence of an internal short circuit was further enhanced with minimal effect on battery capacity.

<<Samples R1c to R4c and Sample CRc>>

Samples R1c to R4c and CRc were produced and evaluated in the same manner as the sample A1, except that the aggregated particle area of the island-shaped regions was changed to those shown in Table 4 by appropriately changing the content of the polymer material (P) contained in the positive electrode mixture and the stirring condition in the positive electrode slurry preparation.

[Table 4]

| Secondary battery | Additive | Content of PPS (% by mass) | Aggregated particle area ($\mu m^2$) | Uneven distribution | Surface temperature (°C) |
|---|---|---|---|---|---|
| B1 | - | 0 | - | - | 72 |
| R1c | PPS | 0.65 | 185 | Not observed | 38 |
| R2c | PPS | 1.30 | 320 | Not observed | 40 |
| R3c | PPS | 0.65 | 260 | Not observed | 42 |
| R4c | PPS | 0.65 | 850 | Not observed | 63 |
| CRc | PPS | 0.65 | 920 | Not observed | 80 < |

Table 4 shows that the surface temperatures of the samples R1c to R4c were significantly lower than those of the samples B1 and B2. It can be understood from the above that safety upon occurrence of an internal short circuit was further enhanced.

<<Samples R1d to R4d and Sample CRd>>

Samples R1d to R4d and CRd of the secondary battery were produced and evaluated in the same manner as the sample A1, except that the content and average particle diameter (D50) of the polymer material (P) contained in the positive electrode mixture were changed to those shown in Table 5.

[Table 5]

| Secondary battery | Additive | Content of PPS (% by mass) | D50 (μm) | Uneven distribution | Surface temperature (°C) |
|---|---|---|---|---|---|
| B1 | - | 0 | - | - | 72 |
| R1d | PPS | 1.30 | 10 | Not observed | 34 |
| R2d | PPS | 1.30 | 25 | Not observed | 48 |
| R3d | PPS | 0.65 | 25 | Not observed | 46 |
| R4d | PPS | 1.30 | 45 | Not observed | 50 |
| CRd | PPS | 1.30 | 60 | Not observed | 80 < |

Table 5 shows that the surface temperature of the samples R1d to R4d were significantly lower than that of the samples B1 and CRd. It can be understood from the above that safety upon occurrence of an internal short circuit was enhanced.

<<Samples R1e to R4e and Sample CRe>>

Samples R1e to R4e and CRe of the secondary battery were produced and evaluated in the same manner as the sample A1, except that the content and BET specific surface area of the polymer material (P) contained in the positive electrode mixture were changed to those shown in Table 6.

[Table 6]

| Secondary battery | Additive | Content of PPS (% by mass) | BET surface area ($m^2/g$) | Uneven distribution | Surface temperature (°C) |
|---|---|---|---|---|---|
| B1 | - | 0 | - | - | 72 |
| R1e | PPS | 0.65 | 1.3 | Not observed | 40 |
| R2e | PPS | 1.30 | 1.8 | Not observed | 40 |
| R3e | PPS | 0.65 | 5 | Not observed | 59 |
| R4e | PPS | 0.65 | 10 | Not observed | 53 |
| CRe | PPS | 0.65 | 13 | Not observed | 80 < |

Table 6 shows that the surface temperatures of the samples R1e to R4e were significantly lower than those of the samples B1 and CRe. It can also be understood that battery safety upon occurrence of an internal short circuit was enhanced by reducing the BET specific surface area.

<<Samples R1f to R3f and Sample CRf>>

Samples R1f to R3f and CRf of the secondary battery were produced and evaluated in the same manner as the sample A1, except that the content and weight average molecular weight Mw of the polymer material (P) contained in the positive electrode mixture were changed to those shown in Table 7.

[Table 7]

| Secondary battery | Additive | Content of PPS (% by mass) | Weight average molecular weight Mw | Uneven distribution | Surface temperature (°C) |
|---|---|---|---|---|---|
| B1 | - | 0 | - | - | 72 |
| R1f | PPS | 1.30 | 13,000 | Not observed | 25 |
| R2f | PPS | 1.30 | 16,000 | Not observed | 58 |
| R3f | PPS | 1.30 | 28,000 | Not observed | 53 |

(continued)

| Secondary battery | Additive | Content of PPS (% by mass) | Weight average molecular weight Mw | Uneven distribution | Surface temperature (°C) |
|---|---|---|---|---|---|
| CRf | PPS | 1.30 | 50,000 | Not observed | 80 < |

Table 7 shows that the surface temperatures of the samples R1f to R3f were significantly lower than those of the samples B1 and CRf. It can also be understood that reduction in weight average molecular weight Mw enhanced battery safety upon occurrence of an internal short circuit.

<<Sample R1g>>

A sample R1g of the secondary battery was produced and evaluated in the same manner as the sample A1, except that the separator was changed to a separator including a base layer of a 10 μm thick microporous thin film made of polyethylene and a heat-resistant layer layered on one side (the positive electrode side) of the base layer.

The melting point of the microporous thin film was 150°C, and the melting point of PPS was 280°C. The heat-resistant layer contained 20% by mass of an inorganic oxide filler (alumina), with the remainder being aromatic polyamide (aramid), and had a thickness of 4 μm.

<<Sample R2g>>

A sample R2g of the secondary battery was produced and evaluated in the same manner as the sample R1g, except that the content of the polymer material (P) contained in the positive electrode mixture was changed to that shown in Table 8.

<<Samples CR1g and 2g>>

Samples CR1g and CR2g of the secondary battery were produced and evaluated in the same manner as the samples R1g and 2g, except that the separator was changed to a 13 μm thick microporous thin film without a heat-resistant layer.

<<Sample CR3g>>

A sample CR3g of the secondary battery was produced in the same manner as the sample CR1g, except that the polymer material (P) was not contained in the positive electrode mixture.

[Table 8]

| Secondary battery | Additive | Content of PPS (% by mass) | Heat-resistance layer | Uneven distribution | Surface temperature (°C) |
|---|---|---|---|---|---|
| R1g | PPS | 1.30 | Present | Not observed | 25 |
| R2g | PPS | 0.65 | Present | Not observed | 34 |
| CR1g | PPS | 1.30 | Absent | Not observed | 74 |
| CR2g | PPS | 0.65 | Absent | Not observed | 75 |
| B1 | - | 0 | Present | Not observed | 72 |
| CR3g | - | 0 | Absent | Not observed | 80 < |

<<Samples R1h and 2h and Samples CR1h to 3h>>

Samples R1h, R2h, and CR1h to CR3h of the secondary battery were produced and evaluated in the same manner as the sample A1, except that the contents of the PPS in the positive electrode mixture in the upper layer region and the lower layer region were changed to those shown in Table 9.

For each of the samples R1h and R2h, a positive electrode mixture slurry for upper layer region use and a positive electrode mixture slurry for lower layer region use were prepared. The content of the polymer material (P) contained in the

positive electrode mixture in one of the upper layer region use and the lower layer region use was set to those shown in Table 9, and the positive electrode mixture for the other region use did not contain the polymer material (P). The positive electrode slurry for lower layer region use was applied to the positive electrode current collector at half the thickness of the positive electrode active material layer in Example 1, and then the positive electrode slurry for the upper layer region use was applied at half the thickness thereof in Example 1. Thereafter, it was dried in the same manner as Example 1, and the resulting unrolled layer was rolled to form a positive electrode active material layer having a density of the positive electrode active material of 3.6 g/cm$^3$. Thus, a positive electrode having a thickness of 160 μm was obtained.

As to Samples CR1h and CR2h, positive electrode slurries were each prepared with the content of the polymer material (P) in the positive electrode mixture as shown in Table 9, and the upper layer region and the lower layer region were simultaneously formed using the corresponding slurries, similar to the sample A1.

[Table 9]

| Secondary battery | Upper layer region | | Lower layer region | | Discharge capacity (%) | Surface temperature (°C) |
|---|---|---|---|---|---|---|
| | Additive | Content (% by mass) | Additive | Content (% by mass) | | |
| R1h | PPS | 2.6 | - | 0 | 97 | 34 |
| R2h | - | 0 | PPS | 2.6 | 97 | 45 |
| CR1h | PPS | 2.6 | PPS | 2.6 | 95 | 32 |
| CR2h | PPS | 1.3 | PPS | 1.3 | 97 | 69 |
| B1 | - | 0 | - | 0 | 100 | 72 |

Here, the discharge capacity was also evaluated. In an environment at 25°C, the battery samples were subj ected to constant current charging at a current of 0.3 It until the voltage reached 4.2 V, and then subj ected to constant voltage charging at a voltage of 4.2 V until the current reached 0.05 It. It was then subjected to constant current discharging at a current of 0.3 It until the voltage reached 2.5 V The same cycle of charging and discharging were repeated twice, and the capacity after the second discharge was determined. Table 9 shows the discharge capacity (%) of each of the samples R1h, R2h, CR1h, and CR2h in terms of relative value (%) when the discharge capacity of the sample B1 is 100%.

[Industrial Applicability]

The nonaqueous electrolyte secondary battery according to the present disclosure is useful as a main power source of a mobile communication device, a portable electronic device, or an electric vehicle, for example.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

[Reference Signs List]

10: secondary battery, 11: sealing body, 12: valve body, 13: metal plate, 14: insulating member, 15: positive electrode plate, 15a: positive electrode lead, 16: negative electrode plate, 16a: negative electrode lead, 17: separator, 18: electrode group, 21: gasket, 22: battery can, 22a: groove, 23: first insulating plate, 24: second insulating plate

## Claims

**1.** A nonaqueous electrolyte secondary battery comprising:

a positive electrode; a negative electrode; a nonaqueous electrolyte; and a separator provided between the positive electrode and the negative electrode,
wherein the positive electrode includes a positive electrode current collector and a positive electrode active material layer carried on the positive electrode current collector,
the positive electrode active material layer contains a positive electrode active material, a binder, and an additive,
the additive is a polymer material having a melting point or thermal decomposition temperature of 200°C or higher

and 500°C or lower,
in a cross section of the positive electrode active material layer, the polymer material forms and is dispersed as a plurality of island-shaped regions, and
an average particle diameter of the polymer material is 50 μm or less.

2. The nonaqueous electrolyte secondary battery according to claim 1, wherein an average perimeter of the island-shaped regions is 60 μm or less.

3. The nonaqueous electrolyte secondary battery according to claim 1, wherein a variance of a Voronoi diagram is $2 \times 10^7$ $\mu m^4$ or less, the Voronoi diagram being obtained by Voronoi tessellation of the cross section of the positive electrode active material layer for the island-shaped regions.

4. The nonaqueous electrolyte secondary battery according to claim 1, wherein an average area of top three largest of the island-shaped regions is 900 $\mu m^2$ or less.

5. The nonaqueous electrolyte secondary battery according to claim 1, wherein an average area of the island-shaped regions is 200 $\mu m^2$ or less.

6. The nonaqueous electrolyte secondary battery according to claim 1, wherein a BET specific surface area of the polymer material is 10 $m^2/g$ or less.

7. The nonaqueous electrolyte secondary battery according to claim 1, wherein a weight average molecular weight (Mw) of the polymer material satisfies Mw < 50,000.

8. The nonaqueous electrolyte secondary battery according to claim 1, wherein the polymer material has a main chain having a phenylene group and a sulfide group.

9. The nonaqueous electrolyte secondary battery of claim 8, wherein the main chain has a repeating structure represented by formula:

[Chemical formula 1]

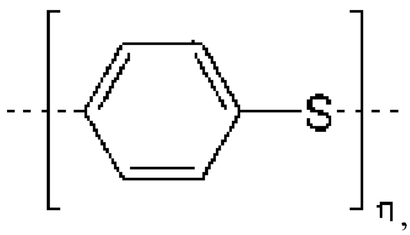

where n is any integer.

10. The nonaqueous electrolyte secondary battery of claim 9, wherein the polymer material contains polyphenylene sulfide.

11. The nonaqueous electrolyte secondary battery according to claim 1, wherein the polymer material contains chloride ions with a mass ratio of 10 ppm or more and 1000 ppm or less.

12. The nonaqueous electrolyte secondary battery according to claim 1, wherein a content of the polymer material contained in the positive electrode active material layer is 0.01% by mass or more and 5% by mass or less.

13. The nonaqueous electrolyte secondary battery according to claim 1, wherein given that T represents a thickness of the positive electrode active material layer, Pb and Pt satisfy 1 < Pt/Pb, Pb representing a presence probability of the polymer material being present in a region of the positive electrode active material layer extending from a surface of the positive electrode current collector to a depth of 0.5T in the positive electrode active material layer, Pt representing a presence probability of the polymer material being present in

a region of the positive electrode active material layer extending from a depth of 0.5T from the surface of the positive electrode current collector to an outermost surface of the positive electrode active material layer.

**14.** The nonaqueous electrolyte secondary battery according to claim 1, wherein given that T represents a thickness of the positive electrode active material layer, Pb and Pt satisfy $1 < Pb/Pt$, Pb representing a presence probability of the polymer material being present in a region of the positive electrode active material layer extending from a surface of the positive electrode current collector to a depth of 0.5T in the positive electrode active material layer, Pt representing a presence probability of the polymer material being present in a region of the positive electrode active material layer extending from a depth of 0.5T from the surface of the positive electrode current collector to an outermost surface of the positive electrode active material layer.

**15.** The nonaqueous electrolyte secondary battery according to claim 1,

wherein the separator includes a base layer and a heat-resistant layer layered on the base layer, and
a melting point or thermal decomposition temperature of the polymer material is equal to or higher than a melting point of the base layer.

**16.** The nonaqueous electrolyte secondary battery according to claim 1,

wherein the positive electrode active material contains a lithium-containing transition metal oxide,
the lithium-containing transition metal oxide contains a lithium nickel oxide having a layered rock salt-type crystal structure containing lithium and Ni, and
a content of the Ni in a metal element other than Li contained in the lithium-nickel oxide is 50 at.% or more.

**17.** The nonaqueous electrolyte secondary battery of claim 16,

wherein the lithium nickel oxide is represented by formula: $Li_{\alpha}Ni_{x1}M1_{x2}M2_{(1-x1-x2)}O_{2+\beta}$,
the element M1 is at least one selected from the group consisting of V, Co, and Mn,
the element M2 is at least one selected from the group consisting of Mg, Al, Ca, Ti, Cu, Zn and Nb, and

$$0.95 \leq \alpha \leq 1.05,$$

$$-0.05 \leq \beta \leq 0.05,$$

$$0.5 \leq x1 < 1,$$

$$0 \leq x2 \leq 0.5,$$

and

$$0 < 1 - x1 - x2 \leq 0.5$$

are satisfied.

**18.** The nonaqueous electrolyte secondary battery according to claim 1, wherein the binder contains at least one selected from the group consisting of fluorocarbon resin and hydrogenated nitrile butadiene rubber.

**19.** A positive electrode for a secondary battery comprising

a positive electrode active material layer containing a positive electrode active material, a binder, and an additive,
wherein the additive is a polymer material having a melting point or thermal decomposition temperature of 200°C or higher and 500°C or lower,
in a cross section of the positive electrode active material layer, the polymer material forms and is dispersed as a plurality of island-shaped regions, and
an average particle diameter of the polymer material is 50 μm or less.

*FIG. 1*

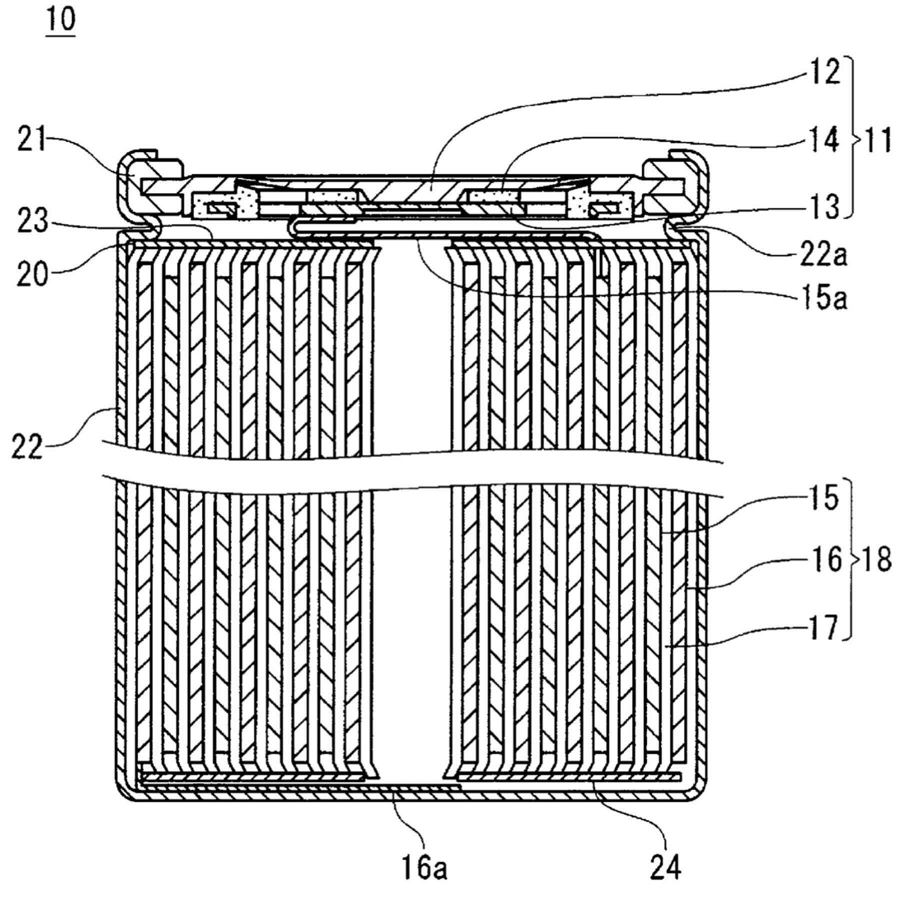

**INTERNATIONAL SEARCH REPORT**

International application No.
**PCT/JP2023/045144**

**A. CLASSIFICATION OF SUBJECT MATTER**

***H01M 4/13***(2010.01)i; ***H01M 4/505***(2010.01)i; ***H01M 4/525***(2010.01)i; ***H01M 4/62***(2006.01)i; ***H01M 10/052***(2010.01)i; ***H01M 50/414***(2021.01)i; ***H01M 50/449***(2021.01)i; ***H01M 50/46***(2021.01)i
FI: H01M4/13; H01M4/505; H01M4/525; H01M4/62 Z; H01M10/052; H01M50/414; H01M50/449; H01M50/46

According to International Patent Classification (IPC) or to both national classification and IPC

**B. FIELDS SEARCHED**

Minimum documentation searched (classification system followed by classification symbols)

H01M4/13; H01M4/505; H01M4/525; H01M4/62; H01M10/052; H01M50/414; H01M50/449; H01M50/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 114824260 A (ZHENGZHOU YUTONG GROUP CO., LTD.) 29 July 2022 (2022-07-29) claims, paragraphs [0033]-[0092] | 1-5, 8-12, 18, 19 |
| Y | | 15-17 |
| A | | 6, 7, 13, 14 |
| Y | JP 2016-170937 A (HITACHI MAXELL LTD.) 23 September 2016 (2016-09-23) claims, paragraphs [0092]-[0094], [0163] | 15-17 |
| A | JP 2013-105681 A (TOYOTA JIDOSHA KABUSHIKI KAISHA) 30 May 2013 (2013-05-30) claims | 1-19 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 February 2024** | **12 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/045144**

| Patent document cited in search report | Publication date (day/month/year) | Patent family member(s) | Publication date (day/month/year) |
|---|---|---|---|
| CN 114824260 A | 29 July 2022 | (Family: none) | |
| JP 2016-170937 A | 23 September 2016 | (Family: none) | |
| JP 2013-105681 A | 30 May 2013 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022211917 A
- JP 2000315502 A